# FASCICULE DE BREVET EUROPEEN

(11) **EP 1 756 388 B1**
(45) Date de publication et mention de la délivrance du brevet: **22.06.2011**
(21) Numéro de dépôt: 05718392.3
(22) Date de dépôt: 08.04.2005
(51) Int. Cl.: E06B 9/32, G05B 19/042

(54) **PROCEDE DE FONCTIONNEMENT D'UN VOLET ROULANT MOTORISE ET DISPOSITIF POUR SA MISE EN OEUVRE**
BETRIEBSVERFAHREN FÜR EINEN MOTORISIERTEN ROLLLADEN UND VORRICHTUNG FÜR DESSEN AUSFÜHRUNG
OPERATING METHOD FOR A POWERED ROLLER SHUTTER, AND DEVICE FOR IMPLEMENTING SAME

(30) Priorité: 09.04.2004 FR 0403739; 10.06.2004 FR 0406284
(43) Date de publication de la demande: 28.02.2007
(73) Titulaire: Somfy SAS, 74300 Cluses (FR)
(72) Inventeur: GREHANT, Bernard, F-74300 NANCY-SUR-CLUSES (FR); FROIDURE, Cyrille, F-74800 LA ROCHE-SUR-FORON (FR); ROUHIER, Valérie, F-74300 THYEZ (FR); VIOLLAND, Paul, F-74970 MARIGNIER (FR)
(74) Mandataire: Bugnion Genève
(86) Numéro de dépôt international: PCT/IB2005/000922
(87) Numéro de publication internationale: WO 2005/098191

(56) Documents cités:
- DE-A1- 19 654 387
- DE-U- 29 620 199
- US-A- 6 078 159

## Description

L'invention concerne un procédé de fonctionnement d'un dispositif de fermeture, d'occultation ou de protection solaire selon le préambule de la revendication 1. L'invention concerne également un dispositif pour la mise en oeuvre d'un tel procédé.

Des actionneurs sont utilisés pour manoeuvrer, grâce à l'énergie mécanique fournie par leur moteur, des éléments mobiles de type ouvrants, écrans enroulables ou protections solaires. Un utilisateur peut commander les déplacements de cet élément par des appuis sur des touches de commande d'un boîtier de commande.

Dans les cas de boîtiers de commande très simples ne comprenant que deux touches associées aux deux sens de déplacement de l'élément, voire même ne comprenant qu'une touche permettant de commander de manière séquentielle les déplacements de l'élément mobile dans les deux sens et l'arrêt, il est souvent nécessaire de prévoir un outil spécifique permettant de configurer l'actionneur, en définissant, par exemple, une fin de course haute, une fin de course basse, une position intermédiaire préférée ou encore pour associer les différentes touches du boîtier de commande à un sens de rotation du moteur.

Les opérations de configuration peuvent être effectuées d'une part lors de l'intégration de l'actionneur à l'élément à manoeuvrer qui est par exemple un volet roulant ou un store, et d'autre part après l'intégration de l'actionneur à l'élément lors de l'installation sur site. Les étapes de configuration peuvent être effectuées manuellement ou, par exemple pour les enregistrements de positions de fin de course, automatiquement si les actionneurs disposent de moyens électroniques le permettant (par exemple par détection de butées).

De nouvelles opérations de configuration ultérieures, dites de re-réglage, peuvent avoir lieu pendant le cycle de vie du dispositif comprenant l'élément mobile et l'actionneur. Ces opérations peuvent notamment avoir lieu lors de phases de maintenance. Ces opérations de re-réglage sont relativement rares dans la vie du dispositif, mais elles doivent cependant être envisagées. Des opérations de re-réglage peuvent avoir lieu par exemple juste après le réglage, si l'installateur souhaite réaliser des ajustements sur les positions réglées.

Il existe un grand nombre de procédures possibles permettant la configuration d'un actionneur.

On connaît du modèle d'utilité DE 296 20 199 U et de la demande DE 196 54 387, un procédé pour enregistrer des heures auxquelles des ordres de mouvement doivent être envoyés à un dispositif d'occultation. Dans ce procédé, un appui d'une durée particulière sur un bouton de commande est interprété comme un ordre d'enregistrement.

On connaît par exemple, de la demande EP 0 822 315 dont le contenu est incorporé par référence à la présente demande, un dispositif de commande de l'alimentation d'un moteur électrique asynchrone dans lequel, une mise en court-circuit des lignes de phase permettant la rotation du moteur dans un premier sens et dans un deuxième sens par un appui simultané sur des touches de commande de rotation du moteur dans le premier sens et dans le deuxième sens place l'électronique de commande dans un mode de configuration.

On connaît également du brevet FR 2 654 229 dont le contenu est incorporé par référence à la présente demande, un procédé de commande d'un moteur. Dans ce procédé, un appui simultané pendant plus de quatre secondes sur les touches commandant la rotation du moteur dans les deux sens opposés est interprété comme un ordre de mise en mode de configuration.

Un nouvel appui simultané peut permettre de valider un enregistrement, ou de sortir du mode de configuration.

De même, l'électronique de commande d'un actionneur peut être directement placée en mode de configuration lors de sa première mise sous tension. L'électronique de commande peut également être placée en mode de configuration par une manoeuvre connue dite de coupure secteur, c'est-à-dire qu'elle réagit à une séquence calibrée en temps comprenant des interruptions de l'alimentation électrique.

Dans la plupart des cas, différents modes de fonctionnement de l'actionneur sont ainsi définis (mode de fonctionnement et mode de configuration), dans lesquels de mêmes actions sur le boîtier de commande sont interprétées de manières différentes. En mode de configuration, il est généralement nécessaire de pouvoir déplacer l'élément mobile, et donc de disposer de commandes de Montée et de Descente, pour ajuster les positions à enregistrer par exemple, ainsi que de valider des étapes de la configuration. Cela pose un problème notamment lorsque le nombre de touches est réduit et/ou lorsque les touches ne peuvent être actionnées simultanément.

On connaît du brevet US 6,078,159 dont le contenu est incorporé par référence à la présente demande, un procédé de fonctionnement conforme au préambule de la revendication 1 et un dispositif de manoeuvre d'un élément de fermeture. Le dispositif comprend un boîtier de commande muni de deux touches permettant respectivement de commander la manoeuvre de l'élément de manoeuvre dans un premier sens et dans un deuxième sens. Pour placer ce dispositif dans un mode de configuration, il est nécessaire d'actionner au moins deux fois l'une ou l'autre des touches, chacune dans une plage de temporelle prédéfinie et inférieure à la durée d'actionnement permettant la commande du mouvement de l'élément de fermeture. Aucun ordre de mouvement n'est pris en compte pendant cette plage temporelle prédéfinie. Ainsi, lorsqu'on veut commander le déplacement de l'élément de fermeture, il est nécessaire d'actionner la touche de commande pendant une durée supérieure à celle de la plage temporelle prédéfinie.

Cette dernière solution fournit une alternative aux ergonomies prévues dans l'art antérieur et notamment dans la demande EP 0 822 315 et le brevet FR 2 654 229. En revanche, un retard au démarrage de l'actionneur doit être introduit pour permettre l'interprétation de la durée d'appui sur une touche de commande. Ces retards au démarrage du moteur peuvent être pénibles à l'utilisation. En effet, il est habituel d'obtenir une réponse immédiate du dispositif commandé suite à une action effectuée sur un boîtier de commande.

Le but de l'invention est de fournir un procédé de fonctionnement d'un dispositif de fermeture, d'occultation ou de protection solaire améliorant les procédés connus de l'art antérieur et palliant aux inconvénients cités précédemment. En particulier, l'invention propose un procédé de fonctionnement d'un dispositif dans lequel les ordres de commande, entrés par l'intermédiaire d'un boîtier de commande, sont exécutés immédiatement par le dispositif et dans lequel les opérations de configuration initiales et ultérieures peuvent être réalisées avec le boîtier de commande, de construction très simple, ne comprenant par exemple, que deux touches de commande.

Le procédé selon l'invention est caractérisé par la partie caractérisante de la revendication 1.
Différentes variantes d'exécution du procédé sont définies par les revendications dépendantes 2 à 9.

Le dispositif selon l'invention comprend un actionneur pour déplacer un élément mobile de fermeture, d'occultation ou de protection solaire, l'actionneur comprenant un moteur, une unité électronique de commande de l'alimentation du moteur munie d'une mémoire et un boîtier de commande relié à l'unité électronique et muni d'au moins une touche de commande. Il est caractérisé en ce qu'il comprend des moyens de gestion électronique et/ou mécanique des appuis sur la ou les touches du boîtier de commande permettant la mise en oeuvre du procédé défini précédemment.

Le dispositif peut comprendre un indicateur de configuration pour indiquer si une ou plusieurs valeurs associées à des positions particulières de l'élément mobile ont été enregistrées.

Le dessin annexé représente, à titre d'exemple, un procédé de commande selon l'invention et un dispositif pour sa mise en oeuvre.
La figure 1 est un schéma d'un dispositif pour la mise en oeuvre du procédé selon l'invention.
La figure 2 et 3 sont des ordinogrammes détaillant un mode d'exécution du procédé de fonctionnement selon l'invention.

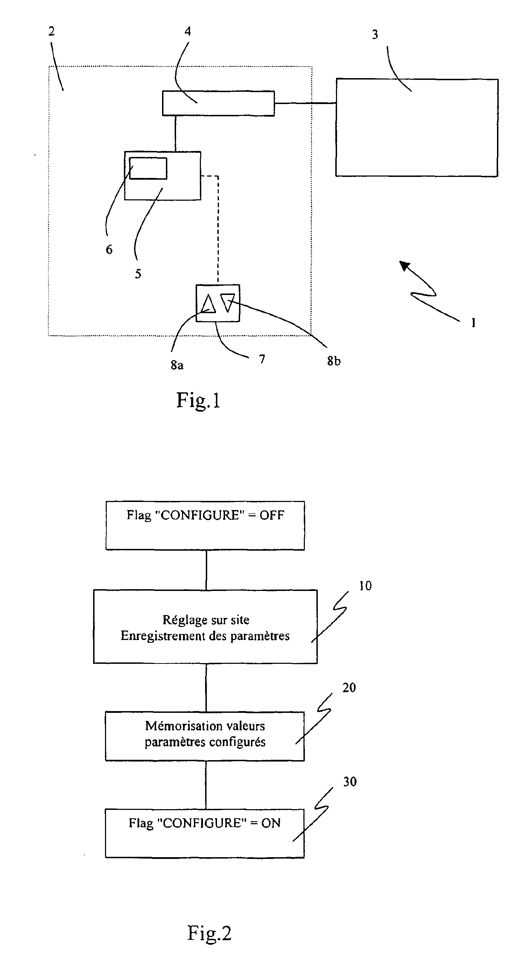

Un dispositif motorisé 1 de fermeture, d'occultation ou de protection solaire est représenté à la figure 1. Le dispositif comprend un actionneur 2 susceptible d'entraîner en mouvement un élément mobile 3 tel qu'un store, un volet ou un écran. L'actionneur comprend un motoréducteur 4 relié à une unité électronique de commande 5. Cette unité électronique de commande comprend ou est liée à une mémoire 6. Elle a pour fonction notamment de piloter la rotation du motoréducteur et de déterminer la position dans laquelle l'élément mobile se trouve à chaque instant. L'actionneur peut comprendre à cet effet un dispositif de comptage associé à un capteur par exemple de type à effet Hall ou optoélectronique.

Pour commander l'actionneur 2, et par conséquent l'élément mobile 3, l'utilisateur dispose d'une interface se présentant sous la forme d'un boîtier de commande 7 muni de touches de commande 8a et 8b. Ces touches 8a et 8b permettent respectivement de commander le mouvement vers le haut et vers le bas de l'élément mobile. Le boîtier de commande peut être intégré à l'actionneur ou disposé à distance de celui-ci. Lorsqu'il est disposé à distance, le boîtier de commande 7 peut communiquer avec l'unité électronique de commande 5 grâce à une liaison filaire ou grâce à une liaison par ondes électromagnétiques (par exemple ondes radioélectriques ou ondes infra-rouges). Dans ces cas, le boîtier de commande 7 et l'unité électronique de commande 5 comprennent respectivement un émetteur et un récepteur de signaux.

Un appui sur l'une des touches provoque l'envoi d'un ordre de commande du boîtier de commande 7 vers l'unité électronique de commande 5, qui provoque la rotation du motoréducteur 4 dans le sens correspondant à la commande et donc le déplacement de l'élément mobile 3.

Des opérations de configuration initiales d'un dispositif de fermeture, d'occultation ou de protection solaire sont décrites ci-après en référence à l'ordinogramme de la figure 2.

Lors d'une première phase 10, des opérations de configuration initiales sont réalisées. Un appairage entre le boîtier de commande 7 et l'unité électronique de commande est éventuellement réalisé, puis des mouvements de l'élément mobile sont commandés pour amener celui-ci dans des positions particulières à enregistrer. Tant qu'aucun enregistrement de position particulière n'est effectué, les mémoires 6 liées à l'unité électronique de commande sont vierges. Dans cette phase, toute commande de mouvement n'est exécutée que lorsque l'action de l'installateur sur la touche correspondante du boîtier de commande est maintenue pendant une durée supérieure à une durée prédéterminée t1, avec par exemple t1 = 0,5 seconde.

Dans une deuxième phase 20, des valeurs correspondant à des positions particulières de l'élément mobile sont enregistrées en mémoire.

Dans une troisième phase 30, lorsqu'au moins une mémoire associée à une position particulière de l'élément mobile (par exemple une position de fin de course, position intermédiaire prédéfinie) est renseignée, et, préférablement, lorsque les deux positions de fin de course sont enregistrées, un indicateur de configuration « CONFIGURE » est activé. L'unité électronique de commande peut également disposer par exemple d'un indicateur à deux états qui bascule lorsqu'une des mémoires associée à l'enregistrement d'une position n'est plus vierge.

Alternativement, l'indicateur de configuration « CONFIGURE » peut être activé lorsqu'une position particulière est déterminée lors d'une procédure automatique, par exemple par détection de butée.

Une action d'effacement de toutes les données contenues dans les mémoires 6 (action RESET connue de l'état de l'art) désactive l'indicateur de configuration « CONFIGURE ».

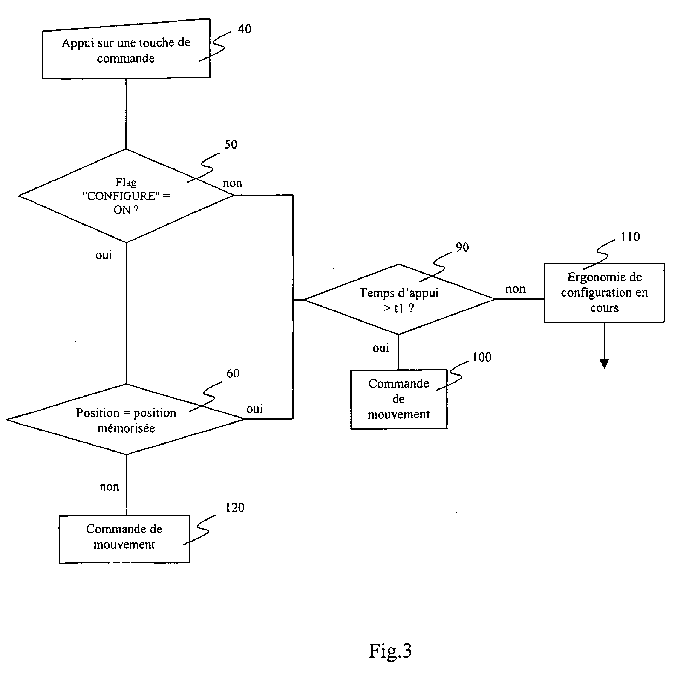

Un mode d'exécution du procédé de commande selon l'invention est décrit ci-après en référence à l'ordinogramme de la figure 3.

Dans une étape 40, un appui est exercé sur une touche du boîtier de commande 7, un signal d'ordre de commande est transmis à l'unité électronique de commande 5, ce signal contenant une certaine quantité d'information lui permettant de distinguer notamment le contenu de l'ordre, son origine et la durée de l'appui.

Dans une étape 50, on teste l'état de l'indicateur de configuration « CONFIGURE ». Si l'indicateur est désactivé, on teste, dans une étape 90, la durée de l'appui sur la touche du boîtier de commande. Si cette durée est supérieure à la durée prédéterminée t1, l'appui de l'étape 40 est considéré, dans une étape 100, comme devant entraîner le mouvement de l'élément mobile et l'actionneur 4 est par conséquent alimenté. Si la durée est inférieure à la durée prédéterminée t1, l'appui est considéré, dans une étape 110, comme un appui particulier, faisant partie d'une ergonomie de configuration et aucun mouvement de l'élément mobile 3 n'est commandé. Lors de cette étape 110, l'appui particulier peut être considéré par exemple comme un ordre de changement de mode de fonctionnement du dispositif motorisé de fermeture, d'occultation ou de protection solaire, comme un ordre de validation d'un réglage, comme un ordre de déclenchement d'une période d'inhibition de l'unité électronique ou comme une opération faisant partie d'une procédure de réglage.

Si lors de l'étape de test 50, on constate que l'indicateur de configuration « CONFIGURE » est activé, on teste, lors d'une étape 60, la position qu'occupe l'élément mobile 3. Si l'élément mobile ne se trouve pas dans une position particulière telle que la position de fin de course haute, la position de fin de course basse ou une position intermédiaire prédéfinie, l'appui de l'étape 40 est considéré, dans une étape 120, comme devant entraîner le mouvement de l'élément mobile et l'actionneur 4 est par conséquent alimenté sans le moindre délai perceptible par l'utilisateur.

Il va de soi que certains délais, dus notamment à l'électronique, vont intervenir lors d'une commande de mouvement ; ainsi, le temps de réveil de l'électronique, le temps de charge des condensateurs, l'analyse de l'ordre de commande (par exemple par filtrage), vont augmenter le temps de réaction entre l'appui et le mouvement réel de l'actionneur. Les termes utilisés dans la présente demande, notamment "sans le moindre délai perceptible par l'utilisateur", "immédiatement", tiennent éventuellement compte de ces délais.

Si lors de l'étape 60, on constate que la position occupée par l'élément mobile 3 correspond à l'une des positions de fin de course ou à une position intermédiaire prédéfinie, on retourne à l'étape de test 90.

Ainsi, si l'indicateur de configuration est actif, c'est-à-dire si le dispositif est partiellement ou est, de préférence, complètement configuré, les appuis sur les touches de commande du boîtier de commande donneront lieu immédiatement à un mouvement de l'élément mobile, à moins que celui-ci se trouve dans une position particulière et dans ce cas, il faudra maintenir l'appui pendant une durée supérieure à la durée prédéterminée t1 pour que celui-ci soit interprété comme un ordre de déplacement. Un appui d'une durée inférieure à la durée prédéterminée t1 sera considéré comme un signal de mise en mode de configuration du dispositif.

On peut prévoir que ce fonctionnement entraînant un retard à la commande de mouvement ne concerne qu'une touche, par exemple, la touche 8a (commandant le déplacement de montée de l'élément mobile vers le haut) lorsque l'élément mobile se trouve dans la position de fin de course haute et la touche 8b (commandant le déplacement de descente de l'élément mobile vers le bas) lorsque l'élément mobile se trouve dans la position de fin de course basse.

Dans ce cas, l'utilisateur souhaitant générer un appui de mise en mode de configuration devra relâcher son appui ou invalider l'ordre (dans le cas d'une touche telle que la transmission du signal est conservée mécaniquement ou électroniquement) dans un temps inférieur à une durée t1.

Si l'élément mobile se trouve, par contre, dans une position quelconque, toute commande est immédiatement prise en compte. Un test de la durée d'appui peut toutefois être mis en oeuvre dans ce cas, mais la durée concernée est alors généralement imperceptible pour l'utilisateur. Il s'agit le plus souvent d'un test de l'ordre de 10ms environ, permettant par exemple de s'affranchir des perturbations électriques. Le mouvement commandé sera, comme cela a été mentionné plus haut, retardé d'un temps résultant des délais mécaniques et électroniques nécessaires au démarrage de l'actionneur.

Si l'indicateur de configuration est inactif, et quelle que soit la position de l'élément mobile, un test est réalisé sur la durée d'appui. Le démarrage du moteur est donc nécessairement retardé de la durée prédéterminée t1.

Le procédé de fonctionnement selon l'invention présente l'avantage de permettre de conserver la même ergonomie pour effectuer les opérations de configuration initiales et ultérieures, ce qui facilite la tâche de l'installateur.

Alternativement, une fois qu'au moins une position particulière de l'élément mobile est enregistrée, une autre ergonomie peut être utilisée au niveau de cette ou ces positions particulières.

Une fois le dispositif installé sur site et configuré par l'installateur, l'utilisateur n'est plus tributaire de retards au démarrage du moteur, qui peuvent être pénibles à l'utilisation

La position de l'élément mobile peut également être repérée par une durée, par exemple une durée de mouvement par rapport à une position de référence. Le comptage de position est alors activé par une horloge.

Le procédé de fonctionnement est adapté aux ergonomies permettant de placer l'électronique de commande dans un mode de configuration par analyse de la durée des appuis de commande, quel que soit le nombre de touches du boîtier de commande et quel que soit le lien (filaire ou non) entre le boîtier de commande et l'unité électronique de commande de l'actionneur.

Pour la mise en oeuvre du procédé de fonctionnement selon l'invention, on peut par exemple stocker dans la mémoire 6 de l'unité électronique 5, une valeur représentative de la durée permettant de discriminer les appuis longs des appuis courts sur les touches de commande. Cette valeur peut alors évoluer en fonction notamment du mode de fonctionnement du dispositif et de la position de l'élément mobile. Ainsi, cette valeur sera par exemple sensiblement nulle lorsque le dispositif de fermeture, d'occultation ou de protection solaire se trouve dans le mode de commande et lorsque l'élément mobile ne se trouve pas dans une position particulière. Dans ces conditions, n'importe quel appui sur l'une des touches de commande est considéré comme un appui long entraînant un ordre de commande de mouvement de l'élément mobile.

## Revendications

1. Procédé de fonctionnement d'un dispositif (1) de fermeture, d'occultation ou de protection solaire, comprenant un actionneur (2) pour déplacer un élément mobile (3) de fermeture, d'occultation ou de protection solaire, l'actionneur (2) comprenant un moteur (4), une unité (5) électronique de commande de l'alimentation du moteur (4) et un boîtier de commande (7) relié à l'unité électronique (5) et muni d'au moins une touche (8a, 8b) de commande, le procédé de fonctionnement comprenant au moins un premier mode dit mode de configuration au cours duquel une ou plusieurs valeurs associées à des positions particulières peuvent être enregistrées pour configurer le dispositif, le procédé de fonctionnement étant **caractérisé en ce qu'**une commande de mouvement de l'élément mobile (3) ne se produit qu'après un appui sur une touche (8a, 8b) pendant une durée supérieure à une première durée t1 si le dispositif n'est pas au moins partiellement configuré alors qu'un appui sur une touche de commande (8a, 8b) peut être interprété immédiatement comme un ordre de commande de mouvement de l'élément mobile si le dispositif est au moins partiellement configuré.

2. Procédé de fonctionnement selon la revendication 1, **caractérisé en ce qu'**un appui sur une touche de commande (8a, 8b) peut être interprété immédiatement comme un ordre de commande de mouvement de l'élément mobile si le dispositif est complètement configuré.

3. Procédé de fonctionnement selon la revendication 1 ou 2, **caractérisé en ce qu'**un appui d'une durée inférieure à la première durée t1 sur une touche (8a, 8b) est interprété immédiatement comme un ordre de commande de mouvement de l'élément mobile (3) si le dispositif (1) se trouve dans un deuxième mode, dit mode de commande et si l'élément mobile (3) ne se trouve pas dans une position particulière et **en ce qu'**un appui d'une durée inférieure à la première durée t1 sur cette touche (8a, 8b) est interprété différemment d'un ordre de commande de mouvement de l'élément mobile (3) dans au moins l'un des cas suivants :
- le dispositif (1) se trouve dans le mode de configuration,
- le dispositif (1) se trouve dans le mode de commande alors que l'élément mobile (3) se trouve dans une position particulière.

4. Procédé de fonctionnement selon la revendication 1 ou 2, **caractérisé en ce qu'**un appui d'une durée inférieure à la première durée t1 sur une touche (8a, 8b) est interprété immédiatement comme un ordre de commande de mouvement de l'élément mobile si le dispositif (1) se trouve dans un deuxième mode, dit mode de commande et si, lorsque l'élément mobile (3) se trouve dans une position particulière de fin de course, la touche (8a, 8b) de commande actionnée est une touche de commande de mouvement de l'élément mobile (3) vers une autre position de fin de course et **en ce qu'**un appui d'une durée inférieure à la première durée t1 sur cette touche (8a, 8b) est interprété différemment d'un ordre de commande de mouvement de l'élément mobile (3) dans au moins l'un des cas suivants :
- le dispositif (1) se trouve dans le mode de configuration,
- le dispositif (1) se trouve dans le mode de commande et la touche (8a, 8b) de commande actionnée est une touche de commande de mouvement de l'élément mobile (3) vers une position de fin de course alors que l'élément mobile (3) se trouve dans cette position de fin de course.

5. Procédé de fonctionnement selon l'une des revendications précédentes, **caractérisé en ce que** le dispositif (1) de fermeture, d'occultation ou de protection solaire bascule automatiquement du mode de configuration au mode de commande dès qu'une ou plusieurs valeurs correspondant à des positions particulières de l'élément mobile (3) ont été enregistrées dans une mémoire (6) de l'actionneur (2).

6. Procédé de fonctionnement selon l'une des revendications précédentes, **caractérisé en ce que** le dispositif (1) de fermeture, d'occultation ou de protection solaire bascule automatiquement du mode de commande au mode de configuration dès qu'au moins une valeur correspondant à une position particulière de l'élément mobile (3) a été effacée dans une mémoire (6) de l'actionneur (2).

7. Procédé de fonctionnement selon l'une des revendications précédentes, **caractérisé en ce qu'**une position particulière de l'élément mobile (3) est une position de fin de course ou une position intermédiaire déterminée manuellement ou automatiquement.

8. Procédé de fonctionnement selon l'une des revendications précédentes, **caractérisé en ce qu'**un ou plusieurs appuis d'une durée inférieure à la première durée t1 sur l'une des touches de commande (8a, 8b) alors que le dispositif (1) de fermeture, d'occultation ou de protection solaire se trouve dans le mode de commande et interprétés différemment d'ordres de commande de mouvement, provoquent un basculement du dispositif (1) de fermeture, d'occultation ou de protection solaire vers le mode de configuration.

9. Procédé de fonctionnement selon l'une des revendications précédentes, **caractérisé en ce qu'**un appui d'une durée inférieure à la première durée t1 sur la touche (8a, 8b) alors que le dispositif (1) de fermeture, d'occultation ou de protection solaire se trouve dans le mode de commande et interprété différemment d'un ordre de commande de mouvement provoque le basculement de l'unité électronique (5) dans un état d'inhibition dans lequel au moins un nouvel appui sur la touche (8a, 8b) est analysé mais ne donne pas naissance à une commande de mouvement de l'élément mobile (3), une séquence particulière d'appuis dans l'état d'inhibition permettant la configuration de l'actionneur (2).

10. Dispositif (1) de fermeture, d'occultation ou de protection solaire, comprenant un actionneur (2) pour déplacer un élément mobile (3) de fermeture, d'occultation ou de protection solaire, l'actionneur comprenant un moteur (4), une unité (5) électronique de commande de l'alimentation du moteur (4) munie d'une mémoire (6) et un boîtier de commande (7) relié à l'unité électronique (5) et muni d'au moins une touche (8a, 8b) de commande, **caractérisé en ce qu'**il comprend des moyens de gestion électronique et/ou mécanique des appuis sur la ou les touches du boîtier de commande permettant la mise en oeuvre du procédé selon l'une des revendications 1 à 9.

11. Dispositif (1) de fermeture, d'occultation ou de protection solaire, selon la revendication 10, **caractérisé en ce qu'**il comprend un indicateur de configuration (CONFIGURE) pour indiquer si une ou plusieurs valeurs associées à des positions particulières de l'élément mobile (3) ont été enregistrées.

## Claims

1. Operating method for a closing, privacy or solar protecting device (1) including an actuator (2) for moving a mobile element (3) for closure, privacy or solar protection, the actuator (2) comprising a motor (4), an electronic unit (5) for controlling the energy supply of the motor (4), and a control module (7) connected to the electronic unit (5) and equipped with at least one control key (8a, 8b), the operating method comprising at least a first mode called configuration mode during which one or more values associated to particular positions can be recorded for configuring the device, the operating method being **characterised in that** a command to move the mobile element (3) is only implemented after pressing a key (8a, 8b) during a time period longer than a first duration (t1) if the device is not at least partially configured, whereas a pressure on a control key (8a, 8b) can immediately be interpreted as a control command for moving the mobile element if the device is at least partially configured.

2. Operating method according to claim 1, **characterised in that** a pressure on a control key (8a, 8b) can be immediately interpreted as a control command for moving the mobile element if the device is fully configured.

3. Operating method according to claim 1 or 2, **characterised in that** a pressure on a control key (8a, 8b) during a period shorter than the first duration (t1) is immediately interpreted as a control command to move the mobile element (3) if the device (1) is in a second mode called control mode and if the mobile element (3) is not at a particular position, and **in that** a pressure on this control key (8a, 8b) during a period shorter than the first duration (t1) is immediately interpreted differently from a control command to move the mobile element (3) in at least one of the following conditions:
- the device (1) is in the configuration mode;
- the device (1) is in the control mode whereas the mobile element (3) is at a particular position.

4. Operating method according to claim 1 or 2, **characterised in that** a pressure on a key (8a, 8b) during a time period shorter than the first time duration (t1) is immediately interpreted as a control command for moving the mobile element if the device (1) is in a second mode called control mode, and if, when the mobile element (3) is at a particular position of travel limit, the actuated control key (8a, 8b) is a control key for moving the mobile element (3) into another travel limit position, and **in that** a pressure on this key (8a, 8b) during a time period shorter than the first time duration (t1) is interpreted otherwise than a control command for moving the mobile element (3), and this in at least one of the following cases:
- the device (1) is in the configuration mode;
- the device (1) is in the control mode and the actuated control key (8a, 8b) is a control key for moving the mobile element (3) to a travel limit position, the mobile element (3) already being at that travel limit position.

5. Operating method according to one of the preceding claims, **characterised in that** the device (1) for closing, privacy or solar protection automatically switches from the configuration mode to the control mode when one or more values corresponding to particular positions of the mobile element (3) have been recorded in a memory (6) of the actuator (2).

6. Operating method according to one of the preceding claims, **characterised in that** the device (1) for closing, privacy or solar protection automatically switches from the control mode to the configuration mode when at least one value corresponding to a particular position of the mobile element (3) has been deleted from a memory (6) of the actuator (2).

7. Operating method according to one of the preceding claims, **characterised in that** a particular position of the mobile element (3) is a travel limit position or a manually or automatically determined intermediate position.

8. Operating method according to one of the preceding claims, **characterised in that** one or more pressures on the control keys (8a, 8b) during a time period shorter than the first duration (t1) provoke switching the device (1) for closing, privacy or solar protection to the configuration mode when the device (1) for closing, privacy or solar protection is in the control mode and the pressures are interpreted differently from control commands for a movement.

9. Operating method according to one of the preceding claims, **characterised in that** a pressure during a period shorter than the first duration (t1) on a key (8a, 8b) when the closing, privacy or solar protecting device (1) is in the control mode and interprets otherwise a control commend for a movement, causes switching the electronic unit (5) into an inhibited state in which at least another pressure onto the key (8a, 8b) is analysed but does not generate an command to move the mobile element (3), a particular sequence of pressures in the inhibited state allowing the configuration of the actuator (2).

10. Device (1) for closing, privacy or solar protection, comprising an actuator (2) for moving a mobile element (3) for closing, privacy or solar protection, the actuator comprising a motor (4) equipped with a memory (6), an electronic unit (5) for controlling the energy supply of the motor (4), and a control module (7) connected to the electronic unit (5) and equipped with at least one control key (8a, 8b), **characterised in that** it comprises electronic or mechanical management means of the pressures exerted on the key or keys of the control module enabling the implementation of the method according to one of claims 1 to 9.

11. Device (1) for closing, privacy or solar protection according to claim 10, **characterised in that** it includes a configuration indicator (CONFIGURE) for indicating whether one or more values associated to particular positions of the mobile element (3) have been recorded.

## Patentansprüche

1. Verfahren zum Betrieb einer Vorrichtung (1) zum Verschliessen, zum Abdunkeln oder zum Sonnenschutz, mit einem Antrieb (2) zwecks Verschiebung eines beweglichen Elements (3) zum Verschliessen, zum Abdunkeln oder zum Sonnenschutz, wobei der Antrieb (2) einen Motor (4), eine elektronische Einheit (5) zur Steuerung der Energiespeisung des Motors (4) und ein Steuergehäuse (7) aufweist, das mit der elektronischen Einheit (5) verbunden und mit mindestens einer Steuertaste (8a, 8b) ausgerüstet ist, wobei das Betriebsverfahren mindestens einen ersten Modus, der als Konfigurationsmodus bezeichnet wird, aufweist, in dem ein oder mehrere Werte, welche besonderen Positionen zugeordnet sind, gespeichert werden können, um die Vorrichtung zu konfigurieren, **dadurch gekennzeichnet, dass** ein Befehl zur Bewegung des beweglichen Elements (3) nur dann ausgeführt wird, wenn während einer Zeitdauer, welche eine erste Zeitdauer t1 übersteigt, auf eine Taste (8a, 8b) gedrückt wurde, und wenn die Vorrichtung nicht schon mindestens teilweise konfiguriert ist, und dass die Betätigung einer Steuertaste (8a, 8b) unmittelbar als Steuerbefehl zur Bewegung des beweglichen Elements interpretiert werden kann, wenn die Vorrichtung schon mindestens teilweise konfiguriert ist.

2. Betriebsverfahren nach Anspruch 1, **dadurch gekennzeichnet, dass** die Betätigung einer Steuertaste (8a, 8b) unmittelbar als Steuerbefehl zur Bewegung des beweglichen Elements interpretiert werden kann, wenn die Vorrichtung vollständig konfiguriert ist.

3. Betriebsverfahren nach Anspruch 1 oder 2, **dadurch gekennzeichnet, dass** die Betätigung einer Taste (8a, 8b) während einer Zeitdauer, welche kürzer als die erste Zeitdauer t1 ist, unmittelbar als Steuerbefehl zur Bewegung des beweglichen Elements (3) interpretiert wird, wenn sich die Vorrichtung (1) in einem zweiten Modus befindet, der als Befehlsmodus bezeichnet wird, und wenn sich das bewegliche Element (3) nicht in einer besonderen Position befindet, und **dadurch gekennzeichnet, dass** die Betätigung dieser Taste (8a, 8b) während einer Zeitdauer, die kürzer als die erste Zeitdauer t1 ist, anders als ein Steuerbefehl zur Bewegung des beweglichen Elements (3) interpretiert wird, und zwar in mindestens einem der folgenden Fälle:
- die Vorrichtung (1) befindet sich im Konfigurationsmodus,
- die Vorrichtung (1) befindet sich im Befehlsmodus, und das bewegliche Element (3) steht an einer besonderen Position.

4. Betriebsverfahren nach Anspruch 1 oder 2, **dadurch gekennzeichnet, dass** die Betätigung einer Taste (8a, 8b) während einer Zeitdauer, die kürzer als die erste Zeitdauer t1 ist, unmittelbar als Steuerbefehl zur Bewegung des beweglichen Elements interpretiert wird, wenn sich die Vorrichtung (1) im zweiten Modus befindet, welcher als Befehlsmodus bezeichnet wird, wenn die betätigte Steuertaste (8a, 8b) eine Taste zum Steuern der Verschiebung des beweglichen Elements (3) in eine andere Endposition der Bewegung ist, und wenn sich das bewegliche Element (3) schon in einer besonderen Endstellungs-Position befindet, und **dadurch gekennzeichnet, dass** die Betätigung dieser Taste (8a, 8b) während einer Zeitdauer, die kürzer als die erste Zeitdauer t1 ist, anders als ein Steuerbefehl zur Bewegung des beweglichen Elements (3) interpretiert wird, und zwar in mindestens einem der folgenden Fälle:
- die Vorrichtung (1) befindet sich im Konfigurationsmodus;
- die Vorrichtung (1) befindet sich im Befehlsmodus, und die betätigte Steuertaste (8a, 8b) ist eine Steuertaste zur Bewegung des beweglichen Elements (3) in eine Endstellungs-Position, wobei sich das bewegliche Element (3) bereits in dieser Endstellungs-Position befindet.

5. Betriebsverfahren nach einem der vorstehenden Ansprüche, **dadurch gekennzeichnet, dass** die Vorrichtung (1) zum Verschliessen, zum Abdunkeln oder zum Sonnenschutz automatisch vom Konfigurationsmodus in den Befehlsmodus umschaltet, sobald ein oder mehrere Werte, welche besonderen Positionen des beweglichen Elements (3) entsprechen, in einem Speicher (6) des Antriebs (2) gespeichert sind.

6. Betriebsverfahren nach einem der vorstehenden Ansprüche, **dadurch gekennzeichnet, dass** die Vorrichtung (1) zum Verschliessen, zum Abdunkeln oder zum Sonnenschutz automatisch vom Befehlsmodus in den Konfigurationsmodus umschaltet, sobald mindestens ein Wert, welcher einer besonderen Position des beweglichen Elements (3) entspricht, aus einem Speicher (6) des Antriebs (2) gelöscht ist.

7. Betriebsverfahren nach einem der vorstehenden Ansprüche, **dadurch gekennzeichnet, dass** eine besondere Position des beweglichen Elements (3) eine Endposition der Bewegung oder eine Zwischenposition ist, welche von Hand oder automatisch bestimmt wird.

8. Betriebsverfahren nach einem der vorstehenden Ansprüche, **dadurch gekennzeichnet, dass** eine oder mehrere Betätigungen einer der Befehlstasten (8a, 8b) während einer Zeitdauer, die kürzer ist als die erste Dauer t1, wenn sich die Vorrichtung (1) zum Verschliessen, zum Verdunkeln oder zum Sonnenschutz im Befehlsmodus befindet, ein Umschalten der Vorrichtung (1) zum Verschliessen, zum Verdunkeln oder zum Sonnenschutz in den Konfigurationsmodus bewirken, wobei diese Betätigungen anders als Steuerbefehle zur Bewegung interpretiert werden.

9. Betriebsverfahren nach einem der vorstehenden Ansprüche, **dadurch gekennzeichnet, dass** die Betätigung einer Taste (8a, 8b) während einer Zeitdauer, die kürzer ist als die erste Dauer t1, anders als ein Steuerbefehl zur Bewegung interpretiert wird, wenn sich die Vorrichtung (1) zum Verschliessen, zum Abdunkeln oder zum Sonnenschutz im Befehlsmodus befindet, und zudem das Umschalten der elektronischen Einheit (5) in einen Sperrzustand hervorruft, bei dem mindestens eine neue Betätigung der Taste (8a, 8b) analysiert wird, aber nicht zu einem Befehl zur Bewegung des beweglichen Elements (3) führt, wobei eine besondere Aufeinanderfolge von Druckbetätigungen in diesem Sperrzustand eine Konfiguration des Antriebs (2) ermöglicht.

10. Vorrichtung (1) zum Verschliessen, zum Verdunkeln oder zum Sonnenschutz, mit einem Antrieb (2) zur Verschiebung eines beweglichen Elements (3) zum Verschliessen, zum Abdunkeln oder zum Sonnenschutz, wobei der Antrieb einen Motor (4) und eine Steuereinheit (5) zum Steuern der Energieversorgung des Motors (4) aufweist und diese Einheit einen Speicher (6) und ein Steuergehäuse (7) besitzt, welches mit der elektronischen Einheit (5) verbunden ist und mindestens eine Steuertaste (8a, 8b) aufweist, **dadurch gekennzeichnet, dass** die Vorrichtung elektronische und/oder mechanische Mittel zur Verwaltung der Betätigungen der Taste oder Tasten des Steuergehäuses aufweist, welche die Ausführung des Verfahrens nach einem der Ansprüche 1 bis 9 ermöglichen.

11. Vorrichtung (1) zum Verschliessen, zum Abdunkeln oder zum Sonnenschutz nach Anspruch 10, **dadurch gekennzeichnet, dass** sie eine Konfigurationsanzeige (KONFIGURATION) zum Anzeigen aufweist, ob ein oder mehrere Werte, welche bestimmten Positionen des beweglichen Elements (3) zugeordnet sind, gespeichert wurden.
